# EUROPEAN PATENT SPECIFICATION

(11) **EP 3 372 574 B1**
(45) Date of publication and mention of the grant of the patent: **31.08.2022**
(21) Application number: 15002609.4
(22) Date of filing: 05.09.2015
(51) Int. Cl.: C04B 40/00, A23K 20/20, A23K 20/24, C05D 3/00, C05D 9/00, C05D 9/02, C04B 111/10

(54) **STABILISING FERROUS SULPHATE FOR REDUCING CHROMIUM 6 IN CEMENT AND FOR APPLICATIONS IN ANIMAL FOOD, HORTICULTURE, AGRICULTURE WITH IMPROVED PROPERTIES AND METHOD TO PRODUCE IT**
STABILISIERUNG VON EISENSULFAT ZUR REDUZIERUNG VON CHROM 6 IN ZEMENT UND FÜR ANWENDUNGEN IN TIERNAHRUNG, GARTENBAU, LANDWIRTSCHAFT MIT VERBESSERTEN EIGENSCHAFTEN UND VERFAHREN ZU SEINER HERSTELLUNG
STABILISATION DE SULFATE FERREUX POUR RÉDUIRE LE CHROME 6 DANS LE CIMENT ET POUR DES APPLICATIONS DANS DES ALIMENTS POUR ANIMAUX, EN HORTICULTURE ET AGRICULTURE AVEC DES PROPRIÉTÉS AMÉLIORÉES ET PROCÉDÉ DE PRODUCTION ASSOCIÉ

(43) Date of publication of application: 12.09.2018
(73) Proprietor: Peringer, Frantisek, 746 01 Opava (CZ)
(72) Inventor: Peringer, Frantisek, 746 01 Opava (CZ)

(56) References cited:
- WO-A1-84/01942
- CZ-B6- 300 050

## Description

This invention deals with the manufacture of a Ferrous Sulphate Preparation to be used mainly as a chromium 6 reducing agent for its use in Portland Cement manufacture with improved effectiveness and improved storage and metering properties but usable also for horticulture; agriculture and as trace element additive for animal food.

The reduction of chromium 6 in Cement to certain maximum permissible value is now required in many countries. A comprehensive description of the state of the art can be found in a publication of the Portland cement association:
Quotes:
"Hexavalent Chromium in Cement Manufacturing: Literature Review "by Linda Hills and Vagn C. Johansen

The use of materials to reduce the level of Cr (VI) formation is especially prevalent in the European cement industry due to the 2003 European Directive which prohibits sale of cement containing more than 2ppm of soluble Cr (VI) when hydrated. Cement companies under this directive are adding reducing agents to comply with this directive. The description of materials used for this purpose, reported effectiveness, limitations, and other items of note are provided below. Examples of capital investment for storage and metering systems for reducing agents, and estimated cost of these agents for the European industry are provided in Cement International (2004, Ferrous Sulphate)

Natural heptahydrate (FeSO4·7H20) is found as an alteration product of iron sulphides as the mineral melanterite, or can be an industrial by-product. It is soluble in water, its aqueous solutions are oxidized slowly by air when cold and rapidly when hot, and the oxidation rate is increased under alkaline conditions (Klemm 1994). ....should not be overheated to avoid partial oxidization and dehydration, leading to reduced solubility.

Various ferrous sulphate types differ in active-substance content, particle size, and chemical and physical properties; the product selected for use is determined on metering location and temperature, and storage conditions (Kuehl 2006).

Monohydrate form (FeSO4H20) has been demonstrated to be a successful reducing agent by Valverde, Lobato, Fernandez, Marijuan, Perez-Mohedano, and Talero (2005)

The addition rate is usually 0.5% by mass and is generally added as powder which may require addition and blending equipment.

The dosing process can influence the effectiveness of the reducer. The addition of the reducer in the cement mill involves thermal, mechanical and chemical stress, which can accelerate the chemical reaction of the reducers and decrease its effectiveness (Kehrmann and Bremers 2006). These authors conclude heptahydrates are particularly effective if added to cement in format of granulates versus ground in the finish mill, whereas monohydrate, which contain less crystallized water are less susceptible to high temperature and can be ground with clinker may effect cement quality. Excess sulphate may result in lower concrete strength, expansion, and possible internal sulphate attack. At high dosages, there can be concerns of increased water demand, long setting time, and possible concrete discoloration or mottling (Sumner, Porteneuve, Jardine, and Macklin 2006).

Regarding reduction results, 0.35% ferrous sulphate reduced 20ppm of Cr (VI) in cement to less than 0.01ppm in aqueous slurry, however, high temperature and humidity in simulated grinding minimized this reduction capacity). Fregert, Gruvberger and Sandahl from Klemm 1994

### End of quotes

### Ferrous sulphate for Cement

Requirements of a Chromium 6+ reducing product are:
- High reducing efficiency
- Easy to store and handle
- Finely dispersed powder
- Stable over time

Of all the reducing agents mentioned above Ferrous Sulphate Heptahydrate (FeSO₄.7H₂O) is the least expensive and should be the means of choice if there were not some shortcomings of it:
FeSO₄.7H₂O, also known as copperas, or green vitriol, is made often as the by-product in a number of production processes in many areas of industry - for example in the manufacture of titanium white or the pickling of sheet iron etc. It is recovered from the process in the form of moist snow-like mass of small crystals with the tendency to agglomerate and to solidify in lumps. But that is not all: In the presence of liquid water and airborne oxygen the bivalent (ferrous) iron oxidises to trivalent (ferric) iron sulphate and iron hydroxide Fe₂(SO4)₃ · 9 H₂O + Fe(OH)₃ and looses its reducing potential. In this process about half of the combined water of the bivalent heptahydrate is set free and the final result is a brown mud.

Wider use of untreated copperas be it for chromium reduction or in agriculture or in animal feed is frustrated by the limitation consequent upon its poor manipulating properties caused by its hygroscopic nature that manifests itself in its agglomeration and partly in its stickiness. These adverse properties of copperas preclude safe storage and bar precise metering in production lines and interfere in its pneumatic transportation. It is difficult to produce its homogeneous mixtures due to its poor distribution.

Ferrous sulphate occurs in different hydrates which are well defined in aqueous solutions: Heptahydrate (FeSO₄·7H₂0) is the hydrate thermodynamically stable under standard conditions, which is 20°C and 65% RH. Heptahydrate starts to transforms to Tetrahydrate (FeSO₄·4H₂0) when the temperature reaches 56.6 °C (133.9 °F). Then, beginning at 64.8 °C (148.6 °F) it is transformed into Monohydrate (FeSO₄·H₂0)

The reactions are less clearly defined under dry, atmospheric conditions. In the latter case, if the vapour pressure of the combined water exceeds the ambient pressure, dehydrated forms apart from tetra- and mono-hydrate may occur. However those x-hydrates will take up crystalline water from every source available, be it humidity from the air or liquid water and eventually form the stable hydrates.

At higher temperatures and dry conditions Monohydrate (FeSO₄·H₂0) is produced. In the presence of oxygen (air) it starts simultaneously being converted in basic sulphate Fe₂(SO4)₃·Fe(OH)₃ by oxidation to trivalent iron.

The combined water, in particular of the heptahydrate is easily driven out and can condensate at a cooler place. In the presence of oxygen the iron oxidises to its trivalent form, which is very hygroscopic and attracts more water and accelerates the oxidising process. Therefore, once the process has started it is self-enhancing and unstoppable.

Many cement plants still use tin salts, which are expensive even at low dosages or they use Ferrous Sulphate Monohydrate (FeSO₄.H₂O), which needs rather high dosages for the intended effect.

A previous Czech patent CZ 300050 describes a mix of Copperas and plaster of Paris, partially dewatered gypsum, Calcium Sulphate Hemihydrate (HH) as a chromium 6 reducing agent. The mix consists 65 to 75% parts of copperas the rest being HH. The two are extensively mixed and stored over a period of 12 to 48h. Loosely cohesive lumps are des-agglomerated by the simple fact of conveying. Many trials und studies have shown that the mix is a highly effective product compared to pure Copperas or to Monohydrate even at a lower content of reducing Fe⁺⁺-ions. The reason for this high effectiveness is not fully understood but it seems that it has to do with the observations made in the development of the new process, subject of the present patent.

However, the product of the former process tends to settle into lumps over longer storage times at higher temperatures occurring in extreme whether conditions. An inconvenience of this product is the need for a long curing time during its production. The product from the Czech patent CZ 300050 in the further description is referred to as G-sal

An earlier Patent, EP0168308, deals with the preparation of ferrous sulphate for agriculture horticulture and animal food. It describes a process for treating Ferrous Sulphate crystallized in the Heptahydrate form having trace amounts of inter-crystalline water containing free acid in which, in order to suppress the tendency of the crystals to agglomerate and to render them able to flow freely, the traces of water are eliminated by adding, in intimate mixture, to this Ferrous Sulphate a Ferrous Sulphate which is under-hydrated to 40.5% by weight at most, in an amount at least sufficient to compensate for the trace amounts of inter-crystalline water, characterized in that the under-hydration of the added Ferrous Sulphate is at least 10% by weight, and the free acid is neutralized by the addition of 0.5 to 2% by weight of a pulverulent neutralizing agent.

This product works well for the intended use but has proven to be less efficient for its use in cement.

The present invention overcomes the shortcomings of the production and the product of the Czech patent and increases it effectiveness.

A preparation meeting the requirements for a reducing agent meets also the requirement for other uses of Ferrous Sulphate as long as the composition does not contain harmful constituents:
Large quantities of Ferrous Sulphate go into the animal feed stuffs as a supplement against iron deficiency.

Large quantity also goes into lawn fertiliser or as an agent against the growing of mosses.

Smaller amounts go into agriculture as part of fertiliser for peat soils and as a means against fungus in viticulture.

All those applications have in common that they need a product which can be stored for an extended period of time and which can easily be extracted from storage space, metered and mixed. As explained before, in its natural state copperas cannot fulfil those requirements.

### Description of the present invention

The present invention overcomes the shortcomings of the production and the product of the Czech patent and increases it effectiveness.

Definitions used here:
Copperas: Ferrous Sulphate Heptahydrate in the form of a snow-like mass of small crystals with free moisture in the order of a one digit percentage and a slightly acidic pH. It originates generally from chemical processes as the digestion of Ilmenite by sulphuric acid in the TiO2 or from iron pickling.
Gypsum: Calcium Sulphate Dihydrate CaSO₄•2H2O mined as a natural occurring mineral or of the synthetic (by-product) type
Plaster of Paris or Hemihydrate (HH) or stucco: At low temperatures calcined Gypsum of the formula CaSO₄•½H2O. After calcining the HH is ground to a Particle Size Distribution (PSD) characterised by a d50 of about 50µm. The Combined Water (CW) of the HH might not be at the stoichiometric value but lower due to zeolitic release of CW by the formation of soluble Anhydrit (AIII) or by the simple fact that the purity of the raw material is lower than 100%.

Stucco is porous and has a enormous internal surface ranging from 4 000 to 12 000 cm²/g and is therefore able to absorb up to 20 vol% of liquid.

### Description of the process:

Step 1: 100 parts of copperas having free moisture of 3 to 8% are des-agglomerated and intimately mixed with 15 to 50 parts of HH containing less than 10%, preferably less than 5% AIII, in a high shear mixer.
Step 2: the resulting mix is immediately passed through a roller compactor in order to apply high pressure creating solid compacts.
Step 3: the compacts are stored for at least 15 minutes before further treatment
Step 4: the compacts are passed through a mill in order to break up the compacts into a powder of approximately the original fineness. Optionally partially dehydrated Copperas in an amount of up to 25 % is co-ground with the compacts. Optionally <1% of fine-ground limestone powder can be added

In the following the resulting product is called "G-Sal Plus"

### Details:

ad step 1: The high shear mixing equipment can be of the batch type or of the continuous type. High shear means that there is enough mechanical energy introduced to individualise the particles of the mix. An example for a high shear mixer is the "Eirich intensive mixer ".

However the (average) residence time should not exceed a certain time limit which depends on the reactivity of the HH used. The purpose is to individualise the Copperas particles in order to offer a maximum surface to the HH. The HH absorbs the free moisture and separates the Copperas particles from each other. In this stage the rehydration of the HH into DH shall not yet take place (hence the time limit).

HH originating from natural Gypsum is preferred because it contains much more very fine particles compared with plaster produced from synthetic gypsum even if the latter is ground.

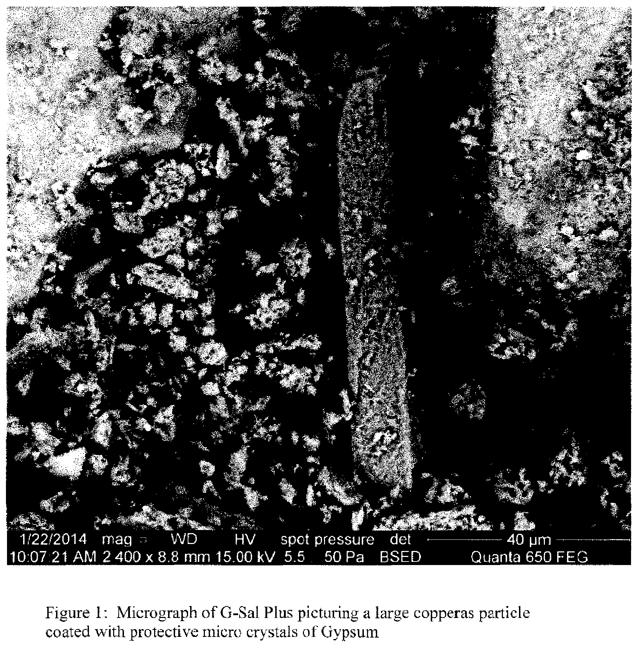

Ad step 2: The compactor assures a more intimate contact between Copperas and HH. This step is crucial because it enables the formation of a protective shell of calcium sulphate dihydrate (DH) on the surface of the copperas crystals (See Figure 1). The Copperas acts in this case as a heterogeneous germ for the formation of DH. If the contact is not close enough the HH recombines its crystalline water in it own mass.

Ad step 3: provides the time needed for the crystallisation process of the HH into DH. There is no rigid upper time limit. The reaction HH to DH cannot use up the complete amount of free moisture even if HH is present in excess. Therefore the compacts are not safe from oxidation and degradation over time and under adverse conditions. That means that the compacts can be stored as long as they do not degrade according to the processes described above.

Ad step 4: The compacts do not correspond to the handling and metering requirements and must be reduced in size. The grinding must be done by a process which does not concentrates energy in a small space, like ball-milling. Rather, an air-swept mill is suitable.

The stability of the product can be enhanced by adding an amount of partially de-hydrated Copperas (FeSO₄·nH₂0 1<n<7) prepared by a dry calcination process). If Copperas is over-dried either by thermal treatment or by exposure to very low partial vapour pressure it releases some of its combined water in a zeolithic manner. i.e. it can take up moisture without changing structure. The process is reversible and quick. Such an over-dried Copperas can act as a sink for moisture if local conditions, e.g. heat or oxidation in the stock of g-sal free combined water. Thus the de-hydrated copperas acts as a stabiliser. The addition of a small amount of finely ground limestone improves the fluidity of the product.

### Properties of the product

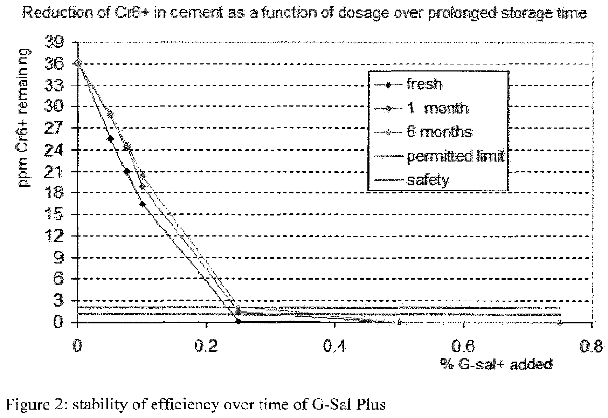

The product obtained by the claimed process has a composition as exemplified in Table 1, It is stable as shown in table 2 and highly efficient as shown in the following table 3 and graph (Figure2).

| Table 1 | Mineralogical composition of the product according to the present invention | | | | | | | |
|---|---|---|---|---|---|---|---|---|
| originating from Copperas | | | | | | | typical | |
| Melanterite | FeSO₄ · 7H₂O | 75,0 | to | 60,0 | % | | 63,0 | % |
| Rozenite | FeSO₄ · 4H₂O | 0,0 | to | 5,0 | % | | 5,0 | % |
| Szomolnokite | FeSO₄ · H₂O | 0,0 | to | 3,0 | % | | 0 | % |
| | | | | | | Σ | 68,0 | |
| originating from hemihydrate | | | | | | | | |
| bassanite | CaSO₄ · 0,5H₂O | 20,0 | to | 25,0 | % | | 23,0 | % |
| Gypsum | CaSO₄ · 2H₂O | 14,0 | to | 6,0 | % | | 8,0 | % |
| Quartz | SiO₂ | 0,4 | to | 0,8 | % | | 0,5 | % |
| Calcite | CaCO₃ | 0,5 | to | 0,8 | % | | 0,6 | % |
| | | 34,9 | | 32,6 | | Σ | 32,1 | |

Example: A batch of G-Sal Plus has been mixed in May, milled in June and stored in big-bags under roof for 5 month. The composition had been determined by X-ray analysis. The result is shown in table 2.

| Table 2 | Mineralogical composition of the tested product | | | |
|---|---|---|---|---|
| originating from Copperas | | | | |
| Melanterite | FeSO₄ · 7H₂O | | 61,5 | % |
| Rozenite | FeSO₄ · 4H₂O | | 4,0 | % |
| | | Σ | 65,5 | |
| originating from hemihydrate | | | | |
| bassanite | CaSO₄ · 0,5H₂O | | 21,0 | % |
| Gypsum | CaSO₄ · 2H₂O | | 12,0 | % |
| Quartz | SiO₂ | | 0,8 | % |
| Calcite | CaCO₃ | | 0,7 | % |
| | | Σ | 34,5 | |

A sample of it was given to certified Cement laboratory (Research Institute of Building Materials, Prague) for testing its efficiency for Chromium 6+ reduction after different storage periods. The results of the test are shown in table 3 and in the graph (figure 2)

| Table 3 | ppm residual Cr6+ | | | |
|---|---|---|---|---|
| G-sal+ added %of mass | age G-sal fresh | age G-sal 1 month | age G-sal 6 months | error % |
| 0 | 36.9 | 36 | 36.2 | 5 |
| 0.05 | 29.1 | 28.2 | 29.1 | 5 |
| 0.075 | 24.9 | 24.8 | 24.8 | 5 |
| 0.1 | 20.6 | 19.3 | 20.4 | 5 |
| 0.25 | 2.4 | 2.2 | 2.2 | 5 |
| 0.5 | 0 | 0 | 0.002 | 10 |
| 0.75 | 0 | 0 | 0 | 10 |

The admissible limit In EC No. 1907/2006 for soluble Cr6+ is 2ppm. This value is safely attained at a dosage of <0.4% added G-sal+ as shown in figure 2 using the numbers in Table 3.

A measure for the effectiveness of a Cr6+ reducing agent is the needed over-dose for conformity calculated as Mol Fe2+/ MolCr6+. This figure varies between 8 and 20 as can be found in commercial brochures.

For G-sal we need a 7.8 fold over-dosage.

For G-sal according CZ 300050B6 this it is up to approximately 16 fold.

G-sal has essentially the same composition than G-sal+. However the specific process of manufacture provides the conditions for the reactions which give the product the much better performance regarding effectiveness and storage stability.

G-Sal Plus for horticulture can have the same composition as the sample in the example. When it comes to animal feed the composition can be made higher in copperas and lower in Calcium sulphate content. However none of the components pose a health risk.

## Claims

1. Ferrous Sulphate Preparation for reducing Chromium 6 in cement and for applications in animal food, horticulture and agriculture comprising a mixture of ferrous sulphate heptahydrate (copperas) and calcium sulphate hemihydrate having undergone mixing procedure which provides shearing forces applied by a high shear mixer followed by a compacting process and grinding, **characterised in that** it is comprising of a protective shell of calcium sulphate dihydrate on the surface of copperas crystals.

2. Ferrous Sulphate Preparation for reducing Chromium 6 in cement and for applications in animal food, horticulture and agriculture according to claims 1 **characterised by** co-grinding the compacted matter with an amount of dehydrated ferrous sulphate.

3. Ferrous Sulphate Preparation for reducing Chromium 6 in cement and for applications in animal food, horticulture and agriculture according to claims 1 to 2 **characterised by** a admixture of ferrous monohydrate of 3 to 10 wt% preferably 5 to 10 wt%, figures based on total dry matter.

4. Ferrous Sulphate Preparation for reducing Chromium 6 in cement and for applications in animal food, horticulture and agriculture according to claim 1 to 3 **characterised by** the use of ferrous sulphate heptahydrate coming from ilmenite digestion or from steel pickling having a free moisture of 3 to 9 wt% and a pH below 7.

5. Ferrous Sulphate Preparation for reducing Chromium 6 in cement and for applications in animal food, horticulture and agriculture according to claim 1 to 3 **characterised by** the use of ferrous sulphate heptahydrate coming from the biological oxidation of metal sulphides.

6. Ferrous Sulphate Preparation for reducing Chromium 6 in cement and for applications in animal food, horticulture and agriculture according to claims 1 to 5 **characterised by** the use of a calcium sulphate hemihydrate having a combined water content of to 6 wt%, preferably 4.5 to 5.5 wt%.

7. Ferrous Sulphate Preparation for reducing Chromium 6 in cement and for applications in animal food, horticulture and agriculture according to claims 1 to 6 **characterised by** the use of a calcium sulphate hemihydrate produced from natural gypsum having a share of clay between 0 to 10 wt% preferably 2 to 5 wt%.

8. Ferrous Sulphate Preparation for reducing Chromium 6 in cement and for applications in animal food, horticulture and agriculture according to claims 1 to 7 **characterised by** the use of a calcium sulphate hemihydrate produced from natural gypsum having a share of CaCO3 between 0 to 2 wt% preferably 0.2 to 1 wt%.

## Patentansprüche

1. Eisensulfatpräparat zur Reduktion von Chrom 6 in Zement und für Anwendungen in der Tiernahrung, im Gartenbau und in der Landwirtschaft, bestehend aus einer Mischung aus Eisen(II)-sulfat-Heptahydrat (Copperas) und CalciumsulfatHalbhydrat das einem Mischverfahren unterzogen wurde, das für Scherkräfte durch einen Mischer mit hoher Scherkraft, gefolgt von einer VerdichtungVerdichtung und Vermahlung, **dadurch gekennzeichnet, dass** sich eine Schutzhülle aus aus Calciumsulfat-Dihydrat auf der Oberfläche der Copperas Kristalle bildet.

2. Eisensulfat Zubereitung zur Reduzierung von Chrom 6 in Zement und für Anwendungen in der Tiernahrung, im Gartenbau und in der Landwirtschaft nach Anspruch 1, **gekennzeichnet durch** Vermahlung des verdichtetem Materials zusammen mit einer Menge von dehydratisiertem Eisen(II)-sulfat.

3. Eisensulfat Zubereitung zur Reduktion von Chrom 6 in Zement und für Anwendungen in der Tierernährung, im Gartenbau und in der Landwirtschaft nach den Ansprüchen 1 bis 2, **gekennzeichnet durch** eine Beimischung von Eisen(II)-Monohydrat von 3 bis 10 Gew.-% vorzugsweise 5 bis 10 Gew.-%, bezogen auf die Gesamttrockenmasse.

4. Eisensulfat Zubereitung zur Reduzierung von Chrom 6 in Zement und für Anwendungen in der Tiernahrung, im Gartenbau und in der Landwirtschaft nach den Ansprüchen 1 bis 3, **gekennzeichnet durch** die Verwendung von Eisen(II)-Sulfat-Heptahydrat, das aus dem Ilmenitaufschluss oder aus der Stahlbeize stammt und eine freie Feuchtigkeit von 3 bis 9 Gew.-% und einem pH-Wert unter 7 aufweist

5. Eisen(II)-sulfat Zubereitung zur Reduktion von Chrom 6 in Zement und für Anwendungen in der Tiernahrung, im Gartenbau und in der Landwirtschaft nach den Ansprüchen 1 bis 3, **gekennzeichnet durch** die Verwendung von Eisen(II)-sulfat-Heptahydrat, das aus der biologischen Oxidation von Metallsulfiden stammt.

6. Eisen(II)-sulfat-Zubereitung zur Reduktion von Chrom 6 in Zement und für Anwendungen in der Tierernährung, im Gartenbau und in der Landwirtschaft nach den Ansprüchen 1 bis 5, **gekennzeichnet durch** die Verwendung eines Calciumsulfat-Halbhydrates (HH) mit einem Kristallwasser Gehalt von bis zu 6 Gew.-%, vorzugsweise 4,5 bis 5,5 Gew.-%.

7. Eisensulfat Zubereitung zur Reduktion von Chrom 6 in Zement und für Anwendungen in der Tierernährung, im Gartenbau und in der Landwirtschaft nach den Ansprüchen 1 bis 6, **gekennzeichnet durch** die Verwendung eines aus Naturgips hergestellten Calciumsulfat-Halbhydrates aus Naturgips mit einem Tonanteil zwischen 0 bis 10 Gew.-%, vorzugsweise 2 bis 5 Gew.-%.

8. Eisensulfat Zubereitung zur Reduktion von Chrom 6 in Zement und für Anwendungen in der Tierernährung, im Gartenbau und in der Landwirtschaft nach den Ansprüchen 1 bis 7, **gekennzeichnet durch** die Verwendung eines aus Naturgips hergestellten Calciumsulfat-Halbhydrates aus Naturgips mit einem Anteil an CaC03 zwischen 0 bis 2 Gew.-% vorzugsweise 0,2 bis 1 Gew.-%.

## Revendications

1. Préparation à base de sulfate ferreux pour la réduction du chrome 6 dans le ciment et pour applications dans l'alimentation animale, l'horticulture et l'agriculture comprenant un mélange de sulfate ferreux heptahydraté (copperas) et de sulfate de calcium hémihydraté ayant subi une procédure de mélange qui fournit des forces de cisaillement appliquées par un mélangeur à haut cisaillement, suivi d'un procédé de compactage et de broyage, **caractérisé en ce qu'**il comprend une enveloppe protectrice de sulfate de calcium dihydraté sur la surface des cristaux de copperas.

2. Préparation à base de sulfate ferreux pour la réduction du chrome 6 dans le ciment et pour des applications dans l'alimentation animale, l'horticulture et l'agriculture selon les revendications 1 **caractérisée par** le co-broyage de la matière compactée avec une quantité de de sulfate ferreux déshydraté.

3. Préparation à base de sulfate ferreux pour réduire le chrome 6 dans le ciment et pour applications en alimentation animale, en horticulture et en agriculture selon les revendications 1 à 2, **caractérisée par** un mélange de monohydrate ferreux de 3 à 10 % en poids de préférence 5 à 10 % en poids, chiffres basés sur la matière sèche totale.

4. Sulfate ferreux Préparation pour la réduction du chrome 6 dans le ciment et pour des applications dans l'alimentation animale, l'horticulture et l'agriculture selon les revendications 1 à 3, **caractérisée par** l'utilisation de sulfate ferreux heptahydraté provenant de la digestion de la ilménite ou du décapage de l'acier, ayant une humidité libre de 3 à 9 % en poids et un pH inférieur à 7.

5. Préparation de sulfate ferreux pour la réduction du Chrome 6 dans le ciment et pour des applications dans l'alimentation animale, l'horticulture et l'agriculture selon la revendication 1 à 3 **caractérisée par** l'utilisation de sulfate ferreux heptahydraté provenant de l'oxydation biologique de sulfures métalliques.

6. Préparation de sulfate ferreux pour réduire le chrome 6 dans le ciment et pour des applications dans l'alimentation animale, l'horticulture et l'agriculture selon les revendications 1 à 5 **caractérisée par** l'utilisation d'un sulfate de calcium hémihydraté ayant une teneur en eau combinée de à 6% en poids, de préférence de 4,5 à 5,5% en poids.

7. Préparation à base de sulfate ferreux pour la réduction du chrome 6 dans le ciment et pour applications dans l'alimentation animale, l'horticulture et l'agriculture selon les revendications 1 à 6 **caractérisée par** l'utilisation d'un sulfate de calcium hémihydraté produit à partir de gypse naturel ayant une part d'argile comprise entre 0 à 10 % en poids, de préférence 2 à 5 % en poids.

8. Préparation à base de sulfate ferreux pour réduire le chrome 6 dans le ciment et pour applications dans l'alimentation animale, l'horticulture et l'agriculture selon les revendications 1 à 7 **caractérisée par** l'utilisation d'un sulfate de calcium hémihydraté produit à partir de gypse naturel ayant une part de CaCO₃ comprise entre 0 et 2 % en poids/o de préférence 0,2 à 1 % en poids.
